# EUROPÄISCHE PATENTSCHRIFT

(11) **EP 1 246 148 B1**
(45) Veröffentlichungstag und Bekanntmachung des Hinweises auf die Patenterteilung: **16.11.2005**
(21) Anmeldenummer: 02002639.9
(22) Anmeldetag: 05.02.2002
(51) Int. Cl.: G08B 13/184

(54) **Vorrichtung zur Überwachung eines Schutzfeldes**
Device for monitoring a protection area
Dispositif de surveillance d'une zone de protection

(30) Priorität: 26.03.2001 DE 10114784
(43) Veröffentlichungstag der Anmeldung: 02.10.2002
(73) Patentinhaber: SICK AG, 79183 Waldkirch (DE)
(72) Erfinder: Wüstefeld, Martin, 79350 Sexau (DE); Plasberg, Georg, Dr., 79353 Bahlingen (DE)
(74) Vertreter: Manitz, Finsterwald & Partner GbR

(56) Entgegenhaltungen:
- DE-A- 19 603 267
- DE-B- 1 228 967
- US-A- 4 012 635
- US-A- 5 008 530
- US-A- 6 075 238
- US-A- 6 157 040

## Beschreibung

Die Erfindung betrifft eine Vorrichtung zur Überwachung eines Schutzfeldes mit einem Lichtempfänger, einer dem Lichtempfänger zugeordneten abbildenden Optik zur Fokussierung von Empfangslicht und einer Signalauslöseeinrichtung zur Auslösung eines Signals.

Derartige Vorrichtungen sind aus dem Stand der Technik bekannt und dienen in unterschiedlichsten Anwendungen dazu, Gefahrenbereiche abzusichern oder Schutzfelder zu überwachen. Im einfachsten Fall weisen solche Vorrichtungen lediglich einen Lichttaster bzw. -sensor oder eine Lichtschranke auf.

Problematisch an den genannten Vorrichtungen ist die Tatsache, daß innerhalb des Schutzfeldes vorhandene unzulässige Objekte mit größtmöglicher Sicherheit erkannt werden müssen, wobei Störeinflüsse durch Umgebungsbedingungen sowie unerlaubte Manipulationen durch Nutzer der Vorrichtungen nicht zu Fehlfunktionen führen sollen.

Die US-A-6,075,238 betrifft eine optische Überwachungseinrichtung mit mehreren aneinander gereihten Musterfeldern an einem Ende eines Überwachungsbereichs, mehreren Objektiven an dem anderen Ende des Überwachungsbereichs, einer einzelnen Kamera, auf die die Objektive die Bilder aller Musterfelder über mehrere, in einer definierten Positionsbeziehung aneinander gereihte Reflektoren abbilden, und einer Auswerteeinrichtung, die die Bilder der Musterfelder mit einem Referenzmuster vergleicht.

Es ist dementsprechend eine Aufgabe der Erfindung, eine Vorrichtung der eingangs genannten Art derart weiterzubilden, daß sie gegenüber Störeinflüssen unempfindlich wird und eine Manipulation durch Nutzer erschwert ist.

Diese Aufgabe wird gelöst durch eine Vorrichtung gemäß Anspruch 1 und insbesondere durch eine Vorrichtung zur Überwachung eines Schutzfeldes mit
- einem ortsauflösenden Lichtempfänger,
- einer dem Lichtempfänger zugeordneten abbildenden Optik zur Fokussierung von Empfangslicht,
- zumindest einem, auf der der abbildenden Optik abgewandten Seite des Schutzfeldes angeordneten Reflektor,
- einer außerhalb des Schutzfeldes und/oder auf der dem Reflektor abgewandten Seite des Schutzfeldes angeordnete Lichtquelle,
- einem Speicher zur Speicherung eines vom Lichtempfänger bei objektfreiem Schutzfeld aufgenommenen Bildes,
- einer Vergleichseinrichtung zum Vergleich eines aktuell aufgenommenen Bildes mit einem im Speicher abgelegten Bild, und
- einer Signalauslöseeinrichtung zur Auslösung eines Signals, falls das aktuell aufgenommene Bild von dem im Speicher abgelegten Bild zumindest in einem vorbestimmten Maß abweicht.

Durch den erfindungsgemäßen Einsatz eines ortsauflösenden Lichtempfängers, eines Reflektors und einer Vergleichseinrichtung wird es möglich, ein Signal immer dann auszulösen, wenn das vom ortsauflösenden Lichtempfänger gelieferte Bild des Reflektors nicht mehr demjenigen Bild des Reflektors bei objektfreiem Schutzfeld entspricht, welches zuvor in einem Speicher abgelegt wurde. Demzufolge kann ein Signal immer dann ausgelöst werden, wenn der Reflektor teilweise oder vollständig von einem im Schutzfeld vorhandenen Objekt verdeckt wird oder wenn sich die Position oder die Form des Reflektors ändert. Folglich können in gleicher Weise in das Schutzfeld eindringende unzulässige Objekte sowie unzulässige Manipulationen am Reflektor erkannt werden.
Auf den Reflektor auftreffendes Störlicht führt hingegen nicht zu einer Signalauslösung, da durch das Störlicht weder die Position noch die Form des Reflektors verändert wird, so daß er vom ortsauflösenden Lichtempfänger und der Vergleichseinrichtung in unveränderter Weise erkannt werden kann.
Die Lichtquelle zur aktiven Beleuchtung des Reflektors ist erfindungsgemäß außerhalb des Schutzfeldes und insbesondere auf der dem Reflektor abgewandten Seite des Schutzfeldes angeordnet. Durch diese aktive Beleuchtung des Reflektors wird auf vorteilhafte Weise eine Unabhängigkeit gegenüber dem Umgebungslicht erreicht.

Im Rahmen der Erfindung sind eine Reihe von weiteren Vorteilen realisierbar, die im Zusammenhang mit den nachfolgend erörterten bevorzugten Ausführungsformen erläutert werden.

Von Vorteil ist es, wenn der Lichtempfänger aus einer Zeile mit zumindest zwei oder einer Matrix aus zumindest vier lichtempfindlichen Elementen, insbesondere Photodioden, besteht. Bei Verwendung einer aus einer Vielzahl von lichtempfindlichen Elementen bestehenden Matrix ist es besonders vorteilhaft, daß nicht nur das Vorhandensein von Reflektoren sondern vielmehr deren Form und Beschaffenheit erkannt und in der Vergleichseinrichtung mit gespeicherten Bilddaten verglichen werden kann. Die genannte Matrix kann beispielsweise als CCD- oder CMOS-Matrixstruktur ausgebildet werden.

Besonders bevorzugt ist es, wenn der Reflektor mit einer Codierung versehen ist, die insbesondere reflektierende und nicht reflektierende Bereiche aufweist. Durch eine solche Codierung kann erreicht werden, daß vom Reflektor kommende Reflexionen klar von Störreflexionen unterschieden werden können. Weiterhin ist eine Manipulation der Vorrichtung durch Einbringung eines weiteren Reflektors in das Schutzfeld ausgeschlossen, da beim Einbringen dieses Reflektors zwangsläufig Unterschiede zwischen dem gespeicherten Bild und dem aktuell aufgenommenen Bild auftreten. Dies gilt selbst dann, wenn der weitere Reflektor die gleiche Codierung trägt, wie der eigentliche Reflektor.

Die erfindungsgemäß vorgesehene abbildende Optik weist bevorzugt eine kurze Brennweite auf. Insbesondere liegt diese Brennweite zwischen 5 und 200 mm.

Von Vorteil ist es weiterhin, wenn eine Abstandsermittlungseinrichtung vorgesehen ist, welche aus dem Abstand zwischen zwei auf den Lichtempfänger abgebildeten Bezugspunkten des Reflektors den Abstand zwischen Lichtempfänger oder abbildender Optik und dem Reflektor berechnet. Als Bezugspunkte kommen dabei insbesondere Codeelemente einer auf dem Reflektor vorhandenen Codierung oder auch die Ränder eines uncodierten Reflektors in Betracht. Durch die Abstandsermittlungseinrichtung kann somit festgestellt werden, wenn der Reflektor entlang der optischen Achse der Vorrichtung zum Zweck einer unzulässigen Manipulation verschoben werden soll. In diesem Fall kann dann ein Warnsignal abgegeben werden.

Von Vorteil ist es, wenn die erfindungsgemäß zur aktiven Beleuchtung des Reflektors vorgesehene Lichtquelle, insbesondere einschließlich einer ihr zugeordneten Sendeoptik, entweder direkt oder indirekt auf den Reflektor ausgerichtet ist. Bei indirekter Ausrichtung kann die Lichtquelle beabstandet von der optischen Achse der abbildenden Optik angeordnet und über einen insbesondere halbdurchlässigen Spiegel auf den Reflektor ausgerichtet werden. Dabei ist der halbdurchlässige Spiegel bevorzugt auf der optischen Achse der abbildenden Optik angeordnet.

Es ist vorteilhaft, wenn die Lichtquelle als gepulste, mit dem Lichtempfänger synchronisierte Lichtquelle ausgebildet ist, da auf diese Weise die Störanfälligkeit zusätzlich verringert werden kann.

Durch Verwendung einer Lichtquelle mit einem schmalbandigen Wellenlängenbereich (Laser, Laserdiode, LED, etc.) kann in Verbindung mit einem zumindest empfängerseitigen Bandpassfilter die Störanfälligkeit der Vorrichtung noch weiter reduziert werden. Der Bandpassfilter kann zwischen abbildender Optik und Lichtempfänger angeordnet werden, wobei er vorzugsweise eine Halbwertsbreite von bis zu 70 nm aufweist.
Bevorzugt ist es, wenn die Lichtquelle als Laserdiode mit einer Halbwertsbreite kleiner 60 nm ausgebildet ist.

Die Lichtquelle kann als Punktlichtquelle ausgebildet werden. Dies bedingt auf vorteilhafte Weise, daß im Schutzfeld vorhandene Objekte mit hoher Schärfe auf den Lichtempfänger abgebildet werden, da ein scharfer Schatten auf den Reflektor projiziert wird.
Alternativ kann bei Inkaufnahme einer Schärfeverrringerung auch eine ausgedehnte Lichtquelle zum Einsatz gelangen. Dies hat gegenüber der Verwendung etwa eines Laserstrahls den Vorteil, daß eine ausgedehnte Lichtquelle ohne Gefährdung des Bedienpersonals mit höherer Leistung betrieben werden kann als eine Laserlichtquelle. Insofern kann aufgrund dieser höheren Leistung auch eine größere Reichweite erzielt werden.

Die Lichtquelle kann zur Erzeugung eines zumindest im wesentlichen parallelen Lichtbündels mit einem Öffnungswinkel von ungefähr 0° oder zur Erzeugung eines Lichtkegels mit einem Öffnungswinkel von zumindest 0,5°, insbesondere von ungefähr 1° ausgelegt sein. Bei letztgenannter Alternative (Lichtkegel) wird die Justage zwischen Lichtempfänger und Reflektor vereinfacht, da der Lichtempfänger nur ungefähr auf den Reflektor ausgerichtet werden muß und anschließend die genaue Position des Reflektors im Rahmen eines Teach-In-Prozesses ohne Schwierigkeiten auf elektronischem Wege eingelernt werden kann, ohne daß eine weitere mechanische Justage nötig wäre. Es wird somit insbesondere gegenüber der Verwendung eines Laserstrahls als Lichtquelle eine Verbesserung erreicht, da ein Laserstrahl aufgrund des nicht vorhandenen Öffnungswinkels mechanisch sehr genau justiert werden muß.

Besonders bevorzugt ist es, wenn die Lichtquelle zur Projektion eines Codes auf den Reflektor ausgelegt ist. In diesem Fall muß der Reflektor lediglich reflektierende Eigenschaften aufweisen, es ist jedoch nicht nötig, den Reflektor mit einem Code zu versehen. Weiterhin ist es durch entsprechende Maßnahmen im Bereich der Projektionsvorrichtung problemlos möglich, den projizierten Code bei Bedarf zu ändern.

Die Lichtquelle kann auf einen Spiegel zur Umlenkung des ausgesandten Lichts in Richtung des Reflektors oder in Richtung eines weiteren Spiegels ausgerichtet werden. Auf diese Weise kann nicht nur ein sich entlang einer im wesentlichen geraden Strecke erstreckendes Schutzfeld zwischen Lichtquelle und Reflektor überwacht werden; vielmehr ist es möglich, ein Schutzfeld zwischen Lichtquelle und Spiegel und ein weiteres Schutzfeld zwischen Spiegel und Reflektor zu überwachen.

Der erfindungsgemäß vorgesehene Reflektor wird bevorzugt als Retroreflektor ausgebildet, welcher das auf ihn auftreffende Licht mit einem nur geringen Streuwinkel wieder in sich zurückreflektiert. Ein solcher Retroreflektor kann beispielsweise aus Tripel- oder Kugelelementen bestehen.

Besonders bevorzugt ist es, wenn zwischen Schutzfeld und Reflektor ein insbesondere mit dem Reflektor fest verbundenes Filter angeordnet ist. Ein solches Filter kann beispielsweise als Kratzschutz für den Reflektor dienen. Weiterhin kann es jedoch auch den Reflektor vor unerlaubten Reproduktionen schützen, wenn es zumindest für die Farben des Codes undurchlässig ist. Es ist dann nicht ohne weiteres möglich, den Code zu reproduzieren bzw. nachzuzeichnen und den reproduzierten Code in das Schutzfeld einzubringen, um denjenigen Bereich, der sich zwischen reproduziertem Code und Reflektor befindet, von der Überwachung auf unerlaubte Weise auszuschließen. Besonders bevorzugt ist es in diesem Zusammenhang, wenn das Filter nur für IR- oder UV-Licht durchlässig ist.

Von Vorteil ist es, wenn zwischen abbildender Optik und Lichtempfänger eine insbesondere verstellbare Blende angeordnet ist, die zur Abschattung von Störlicht beiträgt, das von Lichtquellen außerhalb der optischen Achse der abbildenden Optik herrührt.
Bevorzugt ist die Blende im Bereich des Brennpunktes der abbildenden Optik angeordnet, wobei es von Vorteil sein kann, wenn die Blende nicht genau im Brennpunkt liegt, sondern gegenüber diesem um bis zu 10% der Brennweite der abbildenden Optik verschoben ist.

Durch Verschiebung der Blende entlang der optischen Achse kann die Divergenz/Konvergenz des empfangsseitigen Strahlenganges verändert werden. Bei Einstellen einer großen Systemdivergenz kann die Genauigkeit der auf den Reflektor bezogenen Abstandsmessung erhöht werden, da bei Verschiebung des Reflektors entlang der optischen Achse eine stärkere relative Änderung zwischen den auf den Lichtempfänger abgebildeten Codierungen erfolgt. Eine geringe Divergenz hat dagegen den Vorteil einer konstanten Objektauflösung über nahezu den gesamten, sich entlang der optischen Achse der abbildenden Optik erstreckenden Schutzfeldbereich.

Durch Änderung des Blendendurchmessers kann bei konstanter Brennweite der abbildenden Optik die Tiefenschärfe des Systems beeinflußt werden. Bei kleinem Durchmesser werden nur noch Strahlen konstanten, begrenzten Einfallwinkels vom Reflektor kommend durch die Blende hindurch gelassen. Dadurch entsteht ein Abbild des Reflektors auf dem Lichtempfänger auch außerhalb der klassischen Bildebene. Hierdurch wird auch die Positionierung des Lichtempfängers vereinfacht, da ein großer Toleranzbereich akzeptierbar ist. Die Blendengröße liegt zwischen 0,05 mm bis 3 mm. Bei kleiner Blende wird allerdings die auf den Lichtempfänger fallende Lichtmenge des Senders gering sein. Die Anordnung von Sender/Blende/ abbildende Optik liefert dann das größte Nutzsignal, wenn in Autokollimation gearbeitet wird und Sender und Blende entlang der jeweiligen optischen Achsen den gleichen Abstand zur abbildenden Optik haben.

Zwischen Blende und Lichtempfänger kann eine weitere abbildende Optik vorgesehen sein, deren Brennweite insbesondere zumindest im wesentlichen ihrem Abstand zur Blende entspricht.

Lichtempfänger und Reflektor und gegebenenfalls Umlenkspiegel können in einer unveränderlichen Relativposition zueinander beispielsweise an einem bewegten oder einem unbewegten Teil einer Maschine angeordnet werden, um so bestimmte, im Bereich der Maschine befindliche Schutzfelder zu überwachen.

Weitere bevorzugte Ausführungsformen der Erfindung sind in den Unteransprüchen beschrieben.

Die Erfindung wird nachfolgend an Hand von Ausführungsbeispielen unter Bezugnahme auf die Zeichnungen erläutert; in diesen zeigen:
- Figur 1: ein Prinzipschaubild einer ersten Ausführungsform einer erfindungsgemäßen Vorrichtung,
- Figur 2: ein Prinzipschaubild einer zweiten Ausführungsform einer erfindungsgemäßen Vorrichtung,
- Figur 3: ein Prinzipschaubild einer dritten Ausführungsform einer erfindungsgemäßen Vorrichtung,
- Figur 4: ein Prinzipschaubild einer vierten Ausführungsform einer erfindungsgemäßen Vorrichtung,
- Figur 5: eine dreidimensionale Ansicht einer an einer Abkantpresse montierten erfindungsgemäßen Vorrichtung, und
- Figur 6: eine dreidimensionale Ansicht einer erfindungsgemäßen Vorrichtung mit einem zusätzlichen Umlenkspiegel.

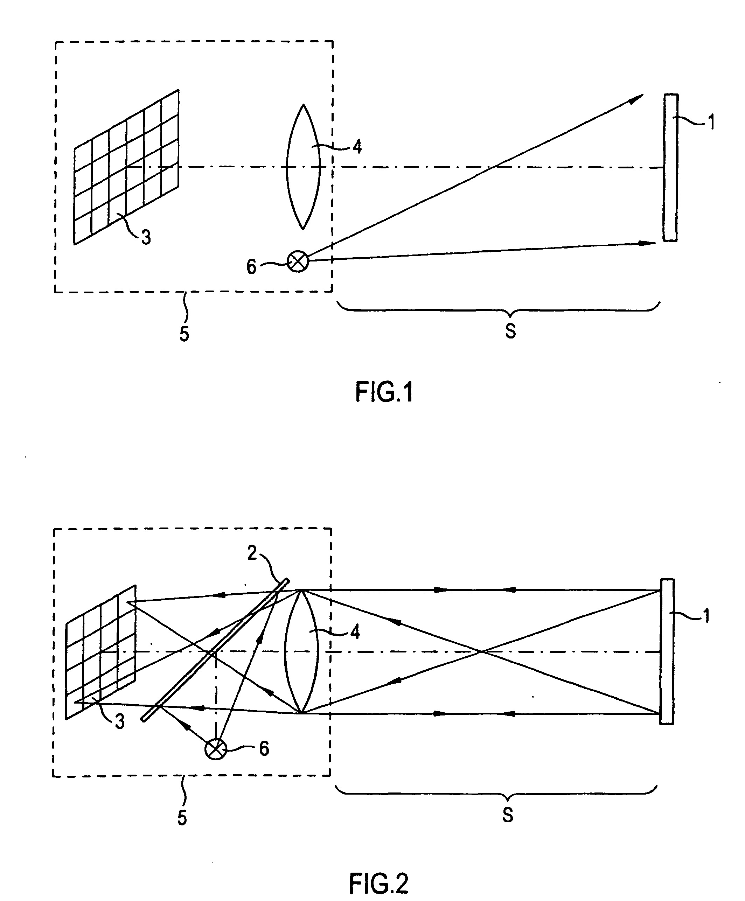

Figur 1 zeigt einen Retroreflektor 1, welcher auf einer Seite eines Schutzfeldes S angeordnet ist und sowohl codiert als auch uncodiert ausgeführt sein kann. Auf der anderen Seite des Schutzfeldes S befindet sich eine Sende- und Empfangseinheit 2, welche zumindest eine Lichtquelle 6, einen ortsauflösenden Lichtempfänger 3 sowie eine abbildende Optik 4 aufweist. Der ortsauflösende Lichtempfänger 3 und die abbildende Optik 4 sind relativ zueinander so angeordnet, daß aus dem Schutzfeld S vom Retroreflektor 1 kommendes Licht auf den ortsauflösenden Lichtempfänger 3 abgebildet wird. Der ortsauflösenden Lichtempfänger 3 ist in Form einer Matrix ausgebildet.

Beim Betrieb der Vorrichtung gemäß Figur 1 wird der Retroreflektor 1 von der Lichtquelle 6 direkt bestrahlt, so daß das von der Lichtquelle 6 ausgehende Licht vom Retroreflektor 1 zum ortsauflösenden Empfänger 3 reflektiert wird. Dadurch, daß der Lichtempfänger 3 ortsauflösend ausgebildet ist, kann festgestellt werden, ob der Retroreflektor 1 in beliebiger Weise verschoben bzw. manipuliert wird. Eine Verschiebung des Retroreflektors 1 senkrecht zur optischen Achse der abbildenden Optik 4 bewirkt eine Lageänderung des Reflektorbildes auf dem ortsauflösenden Empfänger 3. Eine Verschiebung des Retroreflektors 1 entlang der optischen Achse der abbildenden Optik 4 bewirkt eine Größenänderung des Reflektorbildes auf dem ortsauflösenden Empfänger 3. Beide Verschiebungen sind somit detektierbar.

Zudem verändert natürlich ein in das Schutzfeld S eindringendes Objekt das vom ortsauflösenden Empfänger 3 empfangene Reflektorbild, da ein solches Objekt Reflexionen vom Retroreflektor 1 zum ortsauflösenden Empfänger 3 ganz oder teilweise verhindert. Somit sind auch eindringende Objekte detektierbar.

Insofern ist es mit einer Vorrichtung gemäß Figur 1 möglich, sowohl in das Schutzfeld S eindringende Objekte als auch Manipulationen am Retroreflektor 1 zu erkennen.

Durch die aktive Beleuchtung des Retroreflektors 1 mittels der Lichtquelle 6 wird eine Unabhängigkeit gegenüber dem Umgebungslicht erreicht. Wenn die Lichtquelle 6 darüberhinaus gepulst betrieben wird, kann eine zusätzliche Störsignalunempfindlichkeit bewirkt werden.

Zudem kann die Lichtquelle 6 so ausgebildet werden, daß sie zur Projektion eines Codes auf den Retroreflektor 1 geeignet ist, so daß es nicht mehr nötig ist, auf dem Retroreflektor 1 einen Code mechanisch anzubringen.

Figur 2 zeigt im Unterschied zu Figur 1 eine nicht direkt auf den Retroreflektor 1 ausgerichtete Lichtquelle 6. Vielmehr ist die Lichtquelle 6 gemäß Figur 2 so angeordnet, daß ihre Abstrahlrichtung gegenüber Figur 1 um ungefähr 90° gedreht ist, so daß sie in Richtung eines halbdurchlässigen Spiegels 2 strahlt, welcher zwischen Lichtempfänger 3 und abbildender Optik 4 angeordnet ist. Der halbdurchlässige Spiegel 2 ist dabei gegenüber der optischen Achse der abbildenden Optik 4 um 45° geneigt, so daß auf ihn auftreffendes, von der Lichtquelle 6 stammendes Licht um 90° in Richtung der abbildenden Optik 4 umgelenkt wird. Das von der Lichtquelle 6 ausgesandte Licht tritt somit durch die abbildende Optik 4 hindurch und gelangt auf diesem Weg zum Retroreflektor 1. Das vom Retroreflektor 1 reflektierte Licht gelangt wiederum durch die abbildende Optik 4 und durch den halbdurchlässigen Spiegel 2 hindurch zum Lichtempfänger 3.

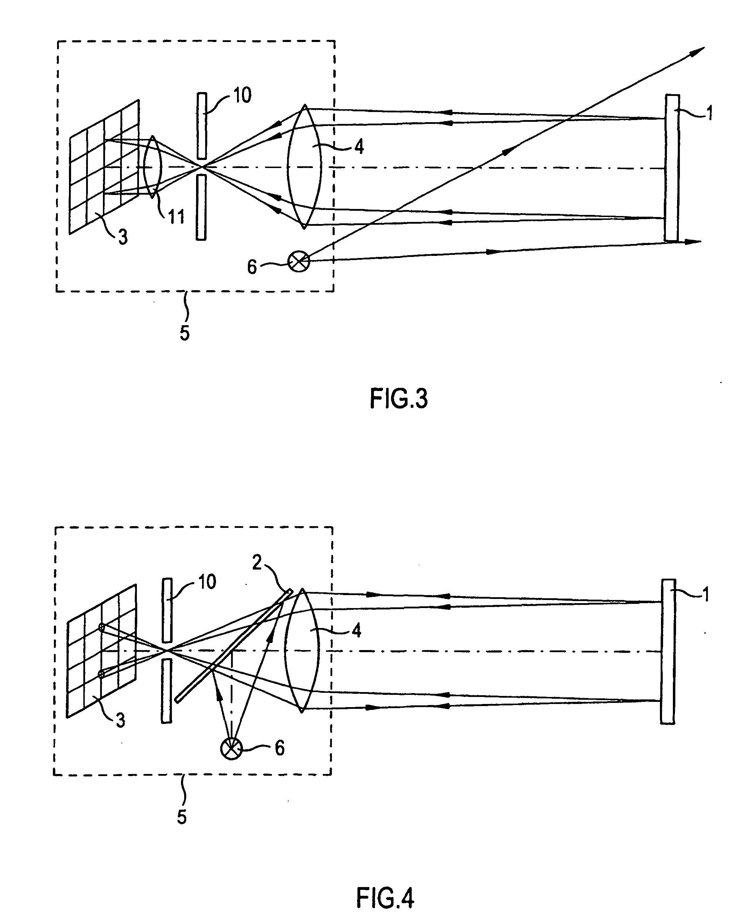

Figur 3 entspricht wiederum im wesentlichen Figur 1 mit dem Unterschied, daß zwischen abbildender Optik 4 und Lichtempfänger 3 eine insbesondere verstellbare Blende 10 angeordnet ist, die die bereits erläuterten Vorteile mit sich bringt. Weiterhin ist zwischen der Blende 10 und dem Lichtempfänger 3 nochmals eine weitere abbildende Optik 11 vorgesehen, welche von der Blende 10 kommendes Licht auf den Lichtempfänger 3 fokussiert.

Bei der Ausbildungsform gemäß Figur 3 kann die weitere abbildende Optik 11 optional auch weggelassen werden.

Figur 4 zeigt eine Mischform der Ausbildungen gemäß den Figuren 2 und 3. Gemäß Figur 4 wird nämlich der Retroreflektor 1 wiederum indirekt über den halbdurchlässigem Spiegel 2 bestrahlt. Zudem ist zwischen halbdurchlässigen Spiegel 2 und Lichtempfänger 3 eine Blende 10 vorgesehen. Optional könnte gemäß Figur 4 zwischen der Blende 10 und dem Lichtempfänger 3 wiederum eine weitere abbildende Optik 11 (Figur 3) vorgesehen werden.

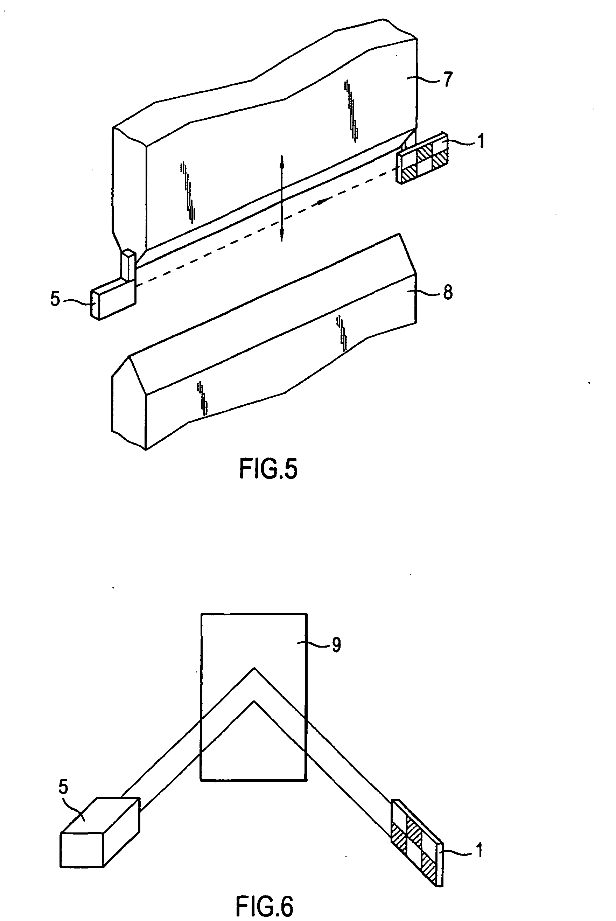

Figur 5 zeigt, daß die gemäß Figuren 1 bis 4 erläuterte Sende- und Empfangseinheit 5 beispielsweise auch an einer bewegten Schneide 7 einer Abkantpresse angeordnet werden kann. Der Abstand des sich zwischen Sende- und Empfangseinheit 5 und Retroreflektor 1 erstreckenden Schutzfeldes zur Schneide 7 muß dabei so bemessen sein, daß im Falle des Eindringens eines Objekts in das Schutzfeld noch ausreichend Zeit zur Verfügung steht, die Abkantpresse zu stoppen.

Alternativ zu der Ausführungsform gemäß Figur 5 ist es jedoch auch möglich, Sende- und Empfangseinheit 5 sowie Retroreflektor 1 an der ortsfesten Schneide 8 der Abkantpresse anzuordnen.

Figur 6 zeigt eine Sende- und Empfangseinheit 5 gemäß Figuren 2 bis 4, wobei die Lichtquelle 6 der Sende- und Empfangseinheit 5 auf einen Umlenkspiegel 9 ausgerichtet ist, von welchem das ausgesandte Licht in Richtung des Retroreflektors 1 reflektiert wird. Das vom Retroreflektor 1 zurückreflektierte Licht gelangt wiederum über den Umlenkspiegel 9 zum ortsauflösenden Empfänger 3 der Sende- und Empfangseinheit 5. Auf diese Weise läßt sich ein zweigeteiltes Schutzfeld überwachen, wobei sich ein erster Teil dieses Schutzfeldes zwischen der Sende- und Empfangseinheit 5 und dem Spiegel 9 und ein zweiter Teil zwischen dem Spiegel 9 und dem Retroreflektor 1 befindet. Durch die Vorsehung eventueller, weiterer Spiegel können dementsprechend komplexere Schutzfeldformen realisiert werden.

### Bezugszeichenliste

- 1: Retroreflektor
- 2: halbdurchlässiger Spiegel
- 3: ortsauflösender Lichtempfänger
- 4: abbildende Optik
- 5: Sende- und Empfangseinheit
- 6: Lichtquelle
- 7: bewegte Schneide
- 8: ortsfeste Schneide
- 9: Umlenkspiegel
- 10: Blende
- 11: abbildende Optik
- S: Schutzfeld

## Patentansprüche

1. Vorrichtung zur Überwachung eines Schutzfeldes (S) mit
- einem ortsauflösenden Lichtempfänger (3),
- einer dem Lichtempfänger (3) zugeordneten abbildenden Optik (4) zur Fokussierung von Empfangslicht,
- zumindest einem, auf der der abbildenden Optik (4) abgewandten Seite des Schutzfeldes (S) angeordneten Reflektor (1),
- einem Speicher zur Speicherung eines vom Lichtempfänger (3) bei objektfreiem Schutzfeld (5) aufgenommenen Bildes,
- einer Vergleichseinrichtung zum Vergleich eines aktuell aufgenommenen Bildes mit einem im Speicher abgelegten Bild, und
- einer Signalauslöseeinrichtung zur Auslösung eines Signals, falls das aktuell aufgenommene Bild von dem im Speicher abgelegten Bild zumindest in einem vorbestimmten Maß abweicht,
**dadurch gekennzeichnet,**
**dass** eine außerhalb des Schutzfeldes (S) und/oder auf der dem Reflektor (1) abgewandten Seite des Schutzfeldes (S) angeordnete Lichtquelle (6) vorgesehen ist, und dass weiterhin eine Abstandsermittlungseinrichtung vorgesehen ist, welche aus dem Abstand zwischen zwei auf den Lichtempfänger (3) abgebildeten Bezugspunkten des Reflektors (1) den Abstand zwischen Lichtempfänger (3) oder abbildender Optik (4) und dem Reflektor (1) berechnet.

2. Vorrichtung nach Anspruch 1,
**dadurch gekennzeichnet,**
**daß** der Lichtempfänger (3) aus einer Zeile mit zumindest zwei oder einer Matrix aus zumindest vier lichtempfindlichen Elementen, insbesondere Photodioden besteht.

3. Vorrichtung nach einem der vorhergehenden Ansprüche,
**dadurch gekennzeichnet,**
**daß** der Reflektor (1) mit einer Codierung versehen ist, die insbesondere reflektierende und nicht reflektierende Bereiche aufweist.

4. Vorrichtung nach einem der vorhergehenden Ansprüche,
**dadurch gekennzeichnet,**
**daß** die abbildende Optik (4) eine Brennweite zwischen 5 und 200 mm besitzt.

5. Vorrichtung nach einem der vorhergehenden Ansprüche,
**dadurch gekennzeichnet,**
**daß** die Lichtquelle (6), insbesondere einschließlich einer ihr zugeordneten Sendeoptik, entweder direkt oder indirekt auf den Reflektor (1) ausgerichtet ist.

6. Vorrichtung nach einem der vorhergehenden Ansprüche,
**dadurch gekennzeichnet,**
**daß** die Lichtquelle (6) beabstandet von der optischen Achse der abbildenden Optik (4) angeordnet und über einen insbesondere halbdurchlässigen Spiegel auf den Reflektor (1) ausgerichtet ist, wobei insbesondere der halbdurchlässige Spiegel auf der optischen Achse der abbildenden Optik (4) angeordnet ist.

7. Vorrichtung nach einem der vorhergehenden Ansprüche,
**dadurch gekennzeichnet,**
**daß** die Lichtquelle (6) als gepulste, mit dem Lichtempfänger (3) synchronisierte Lichtquelle (6) und/oder als Laserdiode mit einer Halbwertsbreite kleiner 60 nm und/oder als Punktlichtquelle ausgebildet ist.

8. Vorrichtung nach einem der vorhergehenden Ansprüche;
**dadurch gekennzeichnet,**
**daß** die Lichtquelle (6) zur Erzeugung eines zumindest im wesentlichen parallelen Lichtbündels mit einem Öffnungswinkel von ungefähr 0° oder zur Erzeugung eines Lichtkegels mit einem Öffnungswinkel von zumindest 0,5°, insbesondere von ungefähr 1° ausgelegt ist.

9. Vorrichtung nach einem der vorhergehenden Ansprüche,
**dadurch gekennzeichnet,**
**daß** die Lichtquelle (6) zur Projektion eines Codes auf den Reflektor (1) ausgelegt ist, und/oder daß die Lichtquelle (6) auf einen Spiegel (9) zur Umlenkung des ausgesandten Lichts in Richtung des Reflektors (1) oder in Richtung eines weiteren Spiegels ausgerichtet ist.

10. Vorrichtung nach einem der vorhergehenden Ansprüche,
**dadurch gekennzeichnet,**
**daß** der Reflektor (1) als Retroreflektor ausgebildet ist, und/oder
**daß** zwischen Schutzfeld (S) und Reflektor (1) ein insbesondere mit dem Reflektor (1) fest verbundenes Filter angeordnet ist, welches insbesondere zumindest für die Farben des Codes undurchlässig ist und/oder welches für IR- oder UV-Licht durchlässig ist.

11. Vorrichtung nach einem der vorhergehenden Ansprüche,
**dadurch gekennzeichnet,**
**daß** zwischen abbildender Optik (4) und Lichtempfänger (3) eine insbesondere verstellbare Blende (10) angeordnet ist, die insbesondere im Bereich des Brennpunktes der abbildenden Optik (4) angeordnet ist.

12. Vorrichtung nach Anspruch 11,
**dadurch gekennzeichnet,**
**daß** Sende- und Empfangslichtstrahlen außerhalb der Vorrichtung in Autokollimation verlaufen, wobei die sich entlang der jeweiligen optischen Achsen von abbildender Optik (4) und Lichtquelle (6) erstreckende Abstände zwischen abbildender Optik (4) und Lichtquelle (6) einerseits und zwischen abbildender Optik (4) und Blende (10) andererseits untereinander gleich sind.

13. Vorrichtung nach einem der Ansprüche 11 oder 12,
**dadurch gekennzeichnet,**
**daß** zwischen Blende (10) und Lichtempfänger (3) eine weitere abbildende Optik (11) vorgesehen ist, deren Brennweite insbesondere zumindest im wesentlichen ihrem Abstand zur Blende (10) entspricht.

14. Vorrichtung nach einem der vorhergehenden Ansprüche,
**dadurch gekennzeichnet,**
**daß** zwischen abbildender Optik (4) und Lichtempfänger (3) ein Bandpassfilter angeordnet ist, welcher insbesondere eine Halbwertsbreite von bis zu 70 nm aufweist.

15. Vorrichtung nach einem der vorhergehenden Ansprüche,
**dadurch gekennzeichnet,**
**daß** Lichtempfänger (3) und Reflektor (1) in einer unveränderlichen Relativposition zueinander an einem bewegten oder einem unbewegten Teil (7, 8) einer Maschine angeordnet sind.

## Claims

1. An apparatus for the monitoring of a protected field (S) comprising
- a spatially resolving light receiver (3);
- an optical imaging system (4) associated with the light receiver (3) for the focusing of received light;
- at least one reflector (1) arranged on the side of the protected field (S) remote from the optical imaging system (4);
- a memory for the storage of an image taken by the light receiver (3) with an object-free protected field (S);
- a comparator for the comparison of a currently taken image with an image stored in the memory; and
- a signal triggering device for the triggering of a signal if the currently taken image differs from the image stored in the memory at least in a pre-determined degree.
**characterised in that** a light source (6) arranged outside the protected field (S) and/or on the side of the protected field (S) remote from the reflector (1) is provided; and **in that** furthermore a distance detection device is provided which computes the spacing between the light receiver (3) or the optical imaging system (4) and the reflector (1) from the spacing between two reference points of the reflector (1) imaged on the light receiver (3).

2. An apparatus in accordance with claim 1, **characterised in that** the light receiver (3) consists of a row with at least two light-sensitive elements or a matrix of at least four light-sensitive elements, in particular photodiodes.

3. An apparatus in accordance with any one of the preceding claims,
**characterised in that** the reflector (1 is provided with a coding which in particular has reflecting regions and non-reflecting regions.

4. An apparatus in accordance with any one of the preceding claims,
**characterised in that** the optical imaging system (4) has a focal length between 5 and 200 mm.

5. An apparatus in accordance with any one of the preceding claims,
**characterised in that** the light source (6), in particular including an optical transmitter system associated with it, is aligned to the reflector (1) either directly or indirectly.

6. An apparatus in accordance with any one of the preceding claims,
**characterised in that** the light source (6) is spaced apart from the optical axis of the optical imaging system (4) and is aligned to the reactor (1) via an in particular semi-transmitting mirror, with the semi-transmitting mirror in particular being arranged on the optical axis of the optical imaging system (4).

7. An apparatus in accordance with any one of the preceding claims,
**characterised in that** the light source (6) is made as a pulsed light source (6) synchronised with the light receiver (3) and/or as a laser diode with a full width at half maximum smaller than 60 nm and/or is made as a spot light source.

8. An apparatus in accordance with any one of the preceding claims,
**characterised in that** the light source (6) is designed for the generation of an at least substantially parallel light bundle with an opening angle of approximately 0° or for the generation of a light cone with an opening angle of at least 0.5°, in particular of approximately 1°.

9. An apparatus in accordance with any one of the preceding claims,
**characterised in that** the light source (6) is designed for the projection of a code onto the reflector (1); and/or **in that** the light source (6) is aligned onto a mirror (9) for the deflection of the transmitted light in the direction of the reflector (1) or in the direction of a further mirror.

10. An apparatus in accordance with any one of the preceding claims,
**characterised in that** the reflector (1) is made as a retro-reflector; and/or **in that** a filter, in particular a filter firmly connected to the reflector (1) is arranged between the protected field (S) and the reflector (1) and is in particular non-transmitting for at least the colours of the code and/or is transmitting for IR light or UV light.

11. An apparatus in accordance with any one of the preceding claims,
**characterised in that** an in particular adjustable diaphragm (10) is arranged between the optical imaging system (4) and the light receiver (3) and is in particular arranged in the region of the focal point of the optical imaging system (4).

12. An apparatus in accordance with claim 11, **characterised in that** the transmitted light beams and the received light beams extend in autocollimation outside the apparatus, with the distances extending along the respective optical axes of the optical imaging system (4) and the light source (6) between the optical imaging system (4) and the light source (6), on the one hand, and between the optical imaging system (4) and the diaphragm (10), on the other hand, being equal to one another.

13. An apparatus in accordance with any one of claims 11 or 12,
**characterised in that** a further optical imaging system (11) is provided between the diaphragm (10) and the light receiver (3) whose focal length in particular corresponds at least substantially to its spacing from the diaphragm (10).

14. An apparatus in accordance with any one of the preceding claims,
**characterised in that** a band pass filter is arranged between the optical imaging system (4) and the light receiver (3) which in particular has a full width at half maximum of up to 70 nm.

15. An apparatus in accordance with any one of the preceding claims,
**characterised in that** the light receiver (3) and the reflector (1) are arranged in an unchanging relative position to one another at a moving or unmoving part (7, 8) of a machine.

## Revendications

1. Dispositif de surveillance d'une zone de protection (S), comportant
- un récepteur de lumière (3) à résolution locale,
- une optique de représentation (4) associée au récepteur de lumière (3) et destinée à focaliser la lumière de réception,
- au moins un réflecteur (1) agencé sur le côté de la zone de protection (S) détourné de l'optique de représentation (4),
- une mémoire pour mémoriser une image prise par le récepteur de lumière (3) lorsque la zone de protection (S) est dépourvue d'objet,
- un système de comparaison pour comparer une image actuellement prise à une image déposée dans la mémoire, et
- un système de déclenchement de signal pour déclencher un signal si l'image prise actuellement diffère au moins d'une valeur prédéterminée de l'image déposée dans la mémoire,
**caractérisé en ce qu'**il est prévu une source de lumière (6) agencée à l'extérieur de la zone de protection (S) et/ou sur le côté de la zone de protection (S) détourné du réflecteur (1), et **en ce qu'**il est prévu en outre un système de détermination de distance qui calcule, à partir de la distance entre deux points de référence du réflecteur (1) représentés sur le récepteur de lumière (3), la distance entre le récepteur de lumière (3) ou l'optique de représentation (4) et le réflecteur (1).

2. Dispositif selon la revendication 1, **caractérisé en ce que** le récepteur de lumière (3) est constitué par une ligne d'au moins deux éléments sensibles à la lumière ou par une matrice d'au moins quatre éléments de ce type, en particulier de photodiodes.

3. Dispositif selon l'une des revendications précédentes, **caractérisé en ce que** le réflecteur (1) est pourvu d'un codage qui présente en particulier des zones réfléchissantes et non réfléchissantes.

4. Dispositif selon l'une des revendications précédentes, **caractérisé en ce que** l'optique de représentation (4) possède une focale comprise ente 5 et 200 mm.

5. Dispositif selon l'une des revendications précédentes, **caractérisé en ce que** la source de lumière (6), en particulier y compris une optique d'émission qui lui est associée, est orientée soit directement soit indirectement vers le réflecteur (1).

6. Dispositif selon l'une des revendications précédentes, **caractérisé en ce que** la source de lumière (6) est agencée à distance de l'axe optique de l'optique de représentation (4) et est orientée vers le réflecteur (1) en particulier via un miroir semi-transparent, et en particulier le miroir semi-transparent est agencé sur l'axe optique de l'optique de représentation (4).

7. Dispositif selon l'une des revendications précédentes, **caractérisé en ce que** la source de lumière (6) est réalisée sous la forme d'une source de lumière pulsée (6) synchronisée avec le récepteur de lumière (3) et/ou sous la forme d'une diode laser présentant une largeur de valeur moyenne inférieure à 60 nm et/ou sous la forme d'une source de lumière ponctuelle.

8. Dispositif selon l'une des revendications précédentes, **caractérisé en ce que** la source de lumière (6) est conçue pour générer un faisceau lumineux au moins sensiblement parallèle d'un angle d'ouverture d'environ 0° ou pour générer un cône lumineux d'un angle d'ouverture d'au moins 0,5°, en particulier d'environ 1°.

9. Dispositif selon l'une des revendications précédentes, **caractérisé en ce que** la source de lumière (6) est conçue pour la projection d'un code sur le réflecteur (1), et/ou **en ce que** la source de lumière (6) est orientée vers un miroir (9) pour renvoyer la lumière émise en direction du réflecteur (1) ou en direction d'un autre miroir.

10. Dispositif selon l'une des revendications précédentes, **caractérisé en ce que** le réflecteur (1) est réalisé sous forme de rétro-réflecteur et/ou **en ce qu'**il est prévu entre la zone de protection (S) et le réflecteur (1) un filtre en particulier fermement relié au réflecteur (1), ledit filtre étant en particulier opaque au moins aux couleurs du code et/ou transparent à la lumière infrarouge ou ultraviolette.

11. Dispositif selon l'une des revendications précédentes, **caractérisé en ce qu'**il est prévu entre l'optique de représentation (4) et le récepteur de lumière (3) un diaphragme (10) en particulier réglable qui est agencé en particulier dans la zone du foyer de l'optique de représentation (4).

12. Dispositif selon la revendication 11, **caractérisé en ce que** les rayons lumineux d'émission ou de réception à l'extérieur du dispositif se propagent en auto-collimation, et les distances qui s'étendent le long des axes optiques respectifs de l'optique de représentation (4) et de la source de lumière (6) et qui sont prévues entre l'optique de représentation (4) et la source de lumière (6) d'une part et entre l'optique de représentation (4) et le diaphragme (10) d'autre part sont égales l'une à l'autre.

13. Dispositif selon l'une ou l'autre des revendications 11 et 12, **caractérisé en ce qu'**il est prévu une autre optique de représentation (11) entre le diaphragme (10) et le récepteur de lumière (3), dont la focale correspond en particulier au moins sensiblement à sa distance par rapport au diaphragme (10).

14. Dispositif selon l'une des revendications précédentes, **caractérisé en ce qu'**il est prévu un filtre passe-bande entre l'optique de représentation (4) et le récepteur de lumière (3), qui présente en particulier une largeur de valeur moyenne allant jusqu'à 70 nm.

15. Dispositif selon l'une des revendications précédentes, **caractérisé en ce que** le récepteur de lumière (3) et le réflecteur (1) sont agencés dans une position relative invariable l'un par rapport à l'autre sur une partie mobile ou sur une partie immobile (7, 8) d'une machine.
